# EUROPÄISCHE PATENTSCHRIFT

(11) **EP 1 829 948 B1**
(45) Veröffentlichungstag und Bekanntmachung des Hinweises auf die Patenterteilung: **07.04.2010**
(21) Anmeldenummer: 07100984.9
(22) Anmeldetag: 23.01.2007
(51) Int. Cl.: C09J 7/02, C09J 7/04

(54) **Verwendung eines durch Filamente verstärkten Klebebandes**
Use of a filament reinforced adhesive tape
Utilisation d'un bande adhésive renforcée par des filaments

(30) Priorität: 07.02.2006 DE 202006002019 U; 19.05.2006 DE 102006023935
(43) Veröffentlichungstag der Anmeldung: 05.09.2007
(73) Patentinhaber: TESA SE, 20253 Hamburg (DE)
(72) Erfinder: Seitz, Dr. Karsten, 21614, Buxtehude (DE); Latz, Dr. Henning, 21337, Lüneburg (DE); Otten, Ulrich, 22579, Hamburg (DE)

(56) Entgegenhaltungen:
- DE-U1-202005 013 009
- US-A- 2 308 693
- US-A- 2 508 855

## Beschreibung

Die Erfindung betrifft die Verwendung eines durch Filamente verstärkten Klebebands.

Bei der Verarbeitung von Geweben ist es seit langer Zeit bekannt, dass der Ausriss einzelner Fäden vermieden werden kann, indem der Schnitt nicht gerade, sondern zickzackförmig ausgeführt wird. Dadurch werden die zur Schnittkante parallelen Fäden in regelmäßigen Abständen quer durchtrennt und können nicht in einem längeren Stück herausgezogen werden. Herausfallende kurze Fadenfragmente stören die folgende Verarbeitung meist deutlich weniger als lange Fäden und werden daher akzeptiert. Dies ist der Grund dafür, dass in der Literatur zahlreiche Vorrichtungen bekannt sind, die derartige Zackenschnitte erzeugen.
Eine weitere Methode, den Faserausriss zu vermeiden, ist es, das Gewebe beim oder nach dem Schnitt thermisch zu verschweißen. Das kann allerdings nur bei thermoplastischen Materialien wie zum Beispiel Polyester, Nylon oder Polypropylen genutzt werden, nicht jedoch zum Beispiel bei Naturfasern, Glas oder Aramidfasern.
Werden Gewebe allerdings durch Beschichtungen, Imprägnierungen oder auf thermischem Wege fixiert, besteht die Gefahr eines Faserausrisses nicht mehr oder nur noch in unwesentlichem Maß, so dass auf Gegenmaßnahmen wie den Zackenschnitt verzichtet wird.

Neben der Vermeidung von Faserausrissen kann der Zackenschnitt ebenfalls vorteilhaft genutzt werden, um die Handeinreissbarkeit von Geweben zu verbessern. Die meisten Gewebe setzen Einreißversuchen von Hand durch die Festigkeit der Einzelfasern und die Flexibilität des Gewebes so viel Widerstand entgegen, dass ein Einriss an einer geraden Schnittkante von Hand nahezu unmöglich ist oder nur mit großer Mühe erreicht werden kann. Da diese Handeinreissbarkeit aber bei der häufigen Verarbeitung von zum Beispiel Rollenpflastern oder Haftklebebändern zur Erleichterung der Handhabung gewünscht wird, kann auch hier der Zackenschnitt vorteilhaft eingesetzt werden. Der Riss geht dabei typischerweise von der Innenecke einer in Richtung Klebebandmitte zeigenden zackenförmigen Ausstanzung aus. Einmal begonnen lässt sich der Riss in dichten Geweben meist ohne große Mühe je nach Schnittrichtung parallel zu Kette oder Schuss fortsetzen.
Diese Technik, eine Handeinreissbarkeit von Geweben zu erreichen, hat allerdings den Nachteil, dass die Zugfestigkeit eines solchen Materials stark reduziert wird. Dies rührt daher, dass bei hoher Belastung der Start von Rissen wie beschrieben an den Innenecken der Ausstanzungen begünstigt wird und die Kraft zur Rissfortpflanzung (Weiterreißkraft) wesentlich geringer als die Kraft ist, die notwendig ist, um einen Riss an der Gewebekante oder im Gewebe zu erzeugen (Einreißkraft). Diesen Nachteil kann man in vielen Fällen in Kauf nehmen, so zum Beispiel bei den oben erwähnten Rollenpflastern.

Auch bei Folienmaterialen kann der Zackenschnitt aus den gleichen Gründen vorteilhaft zum Einsatz kommen, so zum Beispiel bei doppelseitigen Klebebändern zur Fixierung von Teppichböden. Mit der DE 43 18 277 C1 ist die Verwendung von Zackenschnittmessern zum Längsschneiden von doppelseitig klebenden Selbstklebebändern mit PP-Trägern bekannt geworden, die insbesondere als Teppichverlegeband Verwendung finden.
Bevorzugt weisen die Zacken des Zackenschnittmessers eine Zackenhöhe von 0,3 bis 6 mm, insbesondere 0,4 bis 1 mm auf. Aufgrund der sich daraus ergebenden Zackung der Schnittkante erhöht sich die Handeinreissbarkeit des Klebebands.

Im Bereich der (Selbst-)Klebebänder werden neben Trägermaterialien auf Basis von Polymerfolien und Papier auch solche auf Basis von Vliesen und Geweben verwendet. In den Bereich der Gewebe fallen im weiteren Sinn auch solche, die als so genannte Filamentklebebänder ein Trägermaterial enthalten, das aus einer optionalen Stützfolie und in Längsrichtung integrierten, ungezwirnten und ungetengelten oder gezwirnten oder getengelten Filamenten beziehungsweise aus einer optionalen Stützfolie und einem offenen Gewebe oder Gelege aus ungezwirnten und ungetengelten oder gezwirnten oder getengelten Filamenten besteht. Die Filamente bestehen im Allgemeinen aus hochfesten Fasern geringer Reißdehnung, wie zum Beispiel Glasfasern oder auch aus möglicherweise verstreckten Polymerfasern wie Polyesterfasern, Polypropylenfasern, Polyethylenfasern, Polyamidfasern oder Aramid-Fasern.

Die Gefahr des Faserausrisses ist bei diesen Filament-Klebebändern dann besonders groß, wenn die verwendeten Filamente direkt an der Schnittkante liegen und daher in Längsrichtung durchtrennt werden und wenn die Filamente bedingt durch die in den Filamenten parallel und dicht aneinander liegenden Einzelfasern nicht vollständig durch Haftklebernasse oder andere Beschichtungen durchtränkt sind. Somit liegen Einzelfasern im Zentrum der Filamente oft lose und ungebunden vor und können bei einem parallelen Durchtrennen des Filamentes an der Schnittkante leicht herausfallen, insbesondere wenn es sich weder um gesponnene, noch um gezwirnte oder getengelte Filamente handelt.

Die herausgefallenen Einzelfasern können sich in der Folge auf kontinuierlich laufenden Verarbeitungsmaschinen leicht um drehende Wellen und andere Bahnführungselemente wickeln und schließlich zu erheblichem Reinigungsaufwand, Klebeband-Abrissen oder sogar Produktionsstillstand fuhren. Aus wirtschaftlichen Gründen ist dies nicht akzeptabel und würde die Einsetzbarkeit derartiger Filament-Klebebänder in kontinuierlichen Prozessen erheblich erschweren oder sogar unmöglich machen.
Gleichzeitig muss bei der Suche nach Gegenmaßnahmen gegen den beschriebenen Faserausriss bedacht werden, dass die genannten Filament-Selbstklebebänder besonders dann zum Einsatz kommen, wenn eine besonders hohe Zugfestigkeit bei besonders geringer Dehnbarkeit benötigt wird. Daher muss die Zugfestigkeit unter allen Umständen weitgehend erhalten werden. Auch eine Verringerung der Einreißkraft und der Weiterreißkraft ist nicht akzeptabel, da das dem Zweck des Klebebandes zuwider laufen würde.

Die DE 102 23 631 A1 offenbart ein Klebeband mit einer quer zur Ablängrichtung weiterreißbaren Folie als Trägermaterial, auf die auf der einen Seite eine Klebemasse mit einem Flächengewicht von mindestens 40 g/m² beschichtet ist, und auf der auf der anderen, der Klebemasse gegenüberliegenden Seite ein Release vorhanden ist, wobei eine oder beide Längskanten des Klebebandes über den gesamten Bereich Einkerbungen mit einer Breite von weniger als 1000 µm und einer Tiefe kleiner 100 µm aufweisen, wobei die Einkerbungen unregelmäßig angeordnet und von unterschiedlicher Tiefe sind.
Die DE 102 23 632 A1 beschreibt die Verwendung eines Klebebands zur Abdeckung bei Maler- und Lackieranwendungen mit einer quer zur Ablängrichtung weiterreißbaren Folie als Trägermaterial, auf die einseitig eine Klebemasse aufgetragen ist, wobei das Klebeband farbig und/oder nicht transparent ist und eine oder beide Längskanten des Klebebandes über den gesamten Bereich Einkerbungen mit einer Breite von weniger als 1000 µm und einer Tiefe von kleiner 100 µm aufweisen, wobei die Einkerbungen unregelmäßig angeordnet und von unterschiedlicher Tiefe sind.
Aus der DE 102 23 634 A1 ist ein Klebeband mit einer quer zur Ablängrichtung weiterreißbaren Folie als Trägermaterial bekannt, auf die ein- oder beidseitig eine Klebemasse aufgetragen ist und bei der eine der beiden Längskanten eine raue Schnittkante in der Form aufweist, dass über den gesamten Bereich Einkerbungen in einer Häufigkeit von mindestens 1 Stück/mm vorhanden sind, wobei die Einkerbungen unregelmäßig angeordnet und von unterschiedlicher Tiefe sind, und die andere Längskante im wesentlichen glatt ist und diese Einkerbungen nicht oder in der Anzahl stark vermindert aufweist.

Aus der FR 1,522,942 A ist ein einschlägiges Klebeband bekannt, dessen eine Kante mikroskopische Einkerbungen aufweist.

Die US 2,508,855 A und die US 2,308,693 A beschreiben jeweils ein Klebeband mit einem mit einer Klebebeschichtung ausgerüsteten Träger. Der Träger weist in Längsrichtung verlaufende Filamente auf. Beide Längskanten des Klebebands sind mit Einschnitten versehen, die die Filamente durchtrennen.
Eine Verwendung als Verstärkungsband auf Folien oder Papier, Well- oder Vollpappe wird nicht vorgeschlagen.

Die DE 20 2005 013 009 U offenbart ein zur Kabelbandagierung eingesetztes Klebeband, dessen Träger perforiert ist. Filamente (verstärkende Einlagen) sind in dem Träger nicht vorhanden.

Aufgabe der Erfindung ist es daher, bei Applikation und/oder Anwendung als Verstärkungsband auf Folien oder Papier, Well- oder Vollpappe den Ausriss von störenden Fasern oder Filamenten aus mit diesen verstärkten Klebebänden zu vermeiden, ohne die Zugfestigkeit wesentlich zu vermindern.

Gelöst wird diese Aufgabe durch die Verwendung eines Klebebands als Verstärkungsband auf Folien oder Papier, Well- oder Vollpappe, wie sie im Hauptanspruch niedergelegt ist. Gegenstand der Unteransprüche sind dabei vorteilhafte Weiterbildungen des Klebebands.

Demgemäß betrifft die Erfindung die Verwendung eines Klebebands als Verstärkungsband auf Folien oder Papier, Well- oder Vollpappe, wobei das Klebeband ein Trägermaterial aufweist, auf das zumindest einseitig eine Klebemasse aufgetragen ist und dessen Festigkeit in Längsrichtung durch integrierte beziehungsweise angefügte Fasern oder Filamente verstärkt ist, wobei das Klebeband an mindestens einer Längskante Einschnitte, insbesondere einen Zackenschnitt aufweist, wobei die Einschnitte beziehungsweise der Zackenschnitt je Längskante mindestens ein zur Schnittkante im Wesentlichen parallel ausgerichtetes Filament durchtrennen.

Im Sinne dieser Erfindung wird unter einem Filament ein Bündel paralleler, gerader Einzelfasern verstanden, in der Literatur auch oft als Multifilament bezeichnet. Gegebenenfalls kann dieses Faserbündel durch Verdrehen in sich verfestigt werden, dann spricht man von gesponnenen oder gezwirnten Filamenten. Alternativ kann das Faserbündel durch Verwirbeln mit Druckluft oder Wasserstrahl in sich verfestigt werden. Im Weiteren wird für alle diese Ausführungsformen - sowie für die mit Fasern verstärkte Ausführungsform - verallgemeinernd nur noch der Begriff Filament verwendet.

Ist das Trägermaterial ausschließlich durch in Längsrichtung integrierte/angefügte Filamente verstärkt, spricht man von Monofilament-Klebebändern. In einer vorteilhaften Weiterbildung des Erfindungsgegenstands ist das Trägermaterial durch ein offenes Filamentgewebe verstärkt. In diesem Fall wird es als Crossfilament-Klebeband bezeichnet.

Als Trägermaterial, das heißt als Material, welches durch Kombination mit angefügten beziehungsweise integrierten Filamenten die spezifischen Anwendung ermöglicht, eignen sich Laminate, Folien (zum Beispiel BOPP, MOPP, PP, PE, PET, PA, PU, PVC), Schaumstoffe, geschäumte oder metallisierte Folien. Die Folien selbst können wiederum aus mehreren einzelnen Lagen besteht, beispielsweise aus zu Folie coextrudierten Lagen.
Bevorzugt werden Polyolefine, jedoch sind auch Copolymere aus Ethylen und polaren Monomeren wie Styrol, Vinylacetat, Methylmethacrylat, Butylacrylat oder Acrylsäure eingeschlossen. Es kann ein Homopolymer wie HDPE, LDPE, MDPE oder ein Copolymer aus Ethylen einem weiteren Olefin wie Propen, Buten, Hexen oder Octen (zum Beispiel LLDPE, VLDPE) sein. Geeignet sind auch Polypropylene (zum Beispiel Polypropylen-Homopolymere, Polypropylen-Random-Copolymere oder Polypropylen-Block-Copolymere).
Die Folie kann unverstreckt sein.
Erfindungsgemäß hervorragend als Folien einsetzen lassen sich monoaxial und biaxial gereckte Folien. Monoaxial gerecktes Polypropylen zeichnet sich durch seine sehr hohe Reißfestigkeit und geringe Dehnung in Längsrichtung aus und wird beispielsweise zur Herstellung von Strapping Tapes verwendet.
Besonders bevorzugt sind Folien auf Basis Polyester oder insbesondere Polypropylen.

Die Kombination von Trägermaterial mit integrierten beziehungsweise angefügten Filamenten weist vorzugsweise eine Dehnung von weniger als 10% bei einer Belastung von 10 N/cm auf sowie vorzugsweise ein Flächengewicht von weniger als 350 g/m², bevorzugt weniger 200 g/m², ganz bevorzugt weniger 150 g/m².
Weiter vorzugsweise zeigt das Trägermaterial mit integrierten beziehungsweise angefügten Filamenten eine Höchstzugkraftdehnung unter 25%, bevorzugt unter 15%, besonders bevorzugt unter 10%.

Das Trägermaterial ohne Filamente ist üblicherweise bis zu 200 µm dick. In einer besonders vorteilhaften Ausführungsform der Erfindung weist das Trägermaterial ohne Filamente eine Dicke von 10 bis 100 µm, insbesondere von 20 bis 40 µm auf.
Die Folien können farbig und/oder transparent sein.

Die Klebemasse der Klebebänder kann eine (Selbst-)Klebemasse sein, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.
Stellvertretend genannt seien an dieser Stelle vor allem die besonders verträglichen Styrol-Isopren-Styrol (SIS)- und Styrol-Butadien-Styrol (SBS)-Typen.

Daneben hat sich ein 100%-System auf Styrol-Isopren-Styrol (SIS) als geeignet erwiesen.

Als klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen. Auf die Darstellung des Wissensstandes im "Handbook of Pressure Sensitive Adhesive Technology" von Donatas Satas (van Nostrand, 1989) sei ausdrücklich hingewiesen.

Eine Vernetzung ist vorteilhaft für die Verbesserung der Wiederabziehbarkeit des Klebebandes nach der Anwendung und kann thermisch oder durch Bestrahlung mit UV-Licht oder Elektronenstrahlen erfolgen.
Zum Zwecke der thermisch induzierten chemischen Vernetzung sind alle vorbekannten thermisch aktivierbaren chemischen Vernetzer wie beschleunigte Schwefel- oder Schwefelspendersysteme, Isocyanatsysteme, reaktive Melamin-, Formaldehyd- und (optional halogenierter) Phenol-Formaldehydharze beziehungsweise reaktive Phenolharz- oder Diisocyanatvernetzungssysteme mit den entsprechenden Aktivatoren, epoxidierte Polyester- und Acrylat-Harze sowie deren Kombinationen einsetzbar.
Die Vernetzer werden vorzugsweise aktiviert bei Temperaturen über 50 °C, insbesondere bei Temperaturen von 100 °C bis 160 °C, ganz besonders bevorzugt bei Temperaturen von 110 °C bis 140 °C.
Die thermische Anregung der Vernetzer kann auch durch IR-Strahlen oder hochenergetische Wechselfelder erfolgen.

Verwendbar sind Klebemassen auf Lösemittelbasis, auf wässriger Basis oder auch als Hotmeltsystem. Auch eine Masse auf Acrylathotmelt-Basis ist geeignet, wobei diese einen K-Wert von mindestens 20 aufweisen kann, insbesondere größer 30, erhältlich durch Aufkonzentrieren einer Lösung einer solchen Masse zu einem als Hotmelt verarbeitbaren System
Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird.
Die Klebemasse auf Acrylathotmelt-Basis kann aber auch chemisch vernetzt sein.

In einer weiteren Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Eine Klebemasse, die sich ebenfalls als geeignet zeigt, ist eine niedermolekulare Acrylatschmelzhaftklebemasse, wie sie unter der Bezeichnung acResin UV oder Acronal ®, insbesondere Acronal ® DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Abschließend sei erwähnt, dass auch auf Polyurethan basierende Kleber geeignet sind.

Besonders vorteilhaft lässt sich ein einseitig klebend ausgerüstetes Klebeband verwenden, wobei der Auftrag an Klebemasse vorzugsweise zwischen 30 bis 100 g/m², weiter vorzugsweise zwischen 60 bis 80 g/m² liegt.

Das Trägermaterial kann weiter vorzugsweise rückseitig einen Trennlack zur Verbesserung der Abrollbarkeit aufweisen. Zur Erhöhung der Kohäsion zwischen der Klebemasse und dem Trägermaterial oder zwischen Trennlack und Trägermaterial kann das Trägermaterial einer Coronabehandlung unterzogen werden.

Vorteilhaft ist die Verwendung einer Primerschicht zwischen Trägerfolie und Klebmasse zur Verbesserung der Haftung der Klebmasse auf der Folie und somit der rückstandsfreien Wiederabziehbarkeit nach der Anwendung.

Beschreibungen der üblicherweise für Klebebänder verwendeten Klebmassen sowie Trennlacken und Primern finden sich zum Beispiel im "Handbook of Pressure Sensitive Adhesive Technology" von Donatas Satas (van Nostrand, 1989).

Die Klebebänder weisen insbesondere Lauflängen von 1000 bis 30.000 m auf. Als Breite der Rollen werden üblicherweise 10, 15, 19, 25 und 30 mm gewählt.

Dem Trägermaterial werden als Filamente hochfeste Fasern, Zwirne, Mischzwirne oder Fäden mit geringer Reißdehnung beigefügt.

Die Einzelfilamente sind vorzugsweise Endlosfilamente und/oder weisen eine Feinheit zwischen 4 und 8 dtex, vorzugsweise 5 dtex auf. In einer vorteilhaften Ausführungsform sind alle Filamente Endlosfilamente.
In einer bevorzugten Ausführungsform befinden sich zwischen 1 und 30 Filamente pro Zentimeter Breite in dem Trägermaterial, insbesondere zwischen 1 und 5.

Des Weiteren hat es sich als vorteilhaft erwiesen, wenn die Einzelfilamente in einer zum Trägermaterial parallel ausgerichteten Lage oder höchstens in drei zum Trägermaterial parallel ausgerichteten Lagen regelmäßig angeordnet sind.
In einer Lage sind dabei jeweils die Filamente parallel nebeneinander angeordnet.

Die Filamente können dabei aus organischen oder anorganischen Materialien bestehen, so beispielsweise und bevorzugt aus Glas, Kohlenstoff (Carbon), Kombinationen aus beiden Fasertypen, Aramidfasern oder speziellen Polyamiden, aus verstreckten Polymerfasern wie Polyesterfasern, Polypropylenfasern, Polyethylenfasern, weiterhin können die Verstärkungsfasern wenigstens teilweise gefärbt sein, um das Trägermaterial optisch ansprechender zu gestalten. Auf diese Art ist es problemlos möglich, die verstärkten Träger optisch zu differenzieren. Hierzu bieten sich insbesondere gefärbte Glas- oder Polymerfäden an.

Das Trägermaterial ist weiter vorzugsweise mit den Filamenten laminiert. Die Filamente sollten fest mit dem Trägermaterial verbunden sein. Dies kann durch direktes Einarbeiten oder Einlassen der Fasern, Fäden oder Zwirne beziehungsweise Mischzwirne in den Träger geschehen, beispielsweise Einweben bei Geweben, Einstricken bei Gewirken, Einbetten beziehungsweise Einfügen beim Herstellungsverfahren von Folien, Gelen oder Schaumstoffen und Vliesen.

Die Filamente können aber auch nachträglich mit dem Träger verbunden werden, beispielsweise seien das Verschweißen oder das Auflaminieren mit einer entsprechenden Verbindungsschicht genannt.

Die Anzahl der an- oder eingebrachten Fäden beziehungsweise hochfesten Fasern hängt in erster Linie vom jeweils vorgesehenen Verwendungszweck und der angestrebten Höchstzugkraft sowie Höchstzugkraftdehnung des Trägermaterials samt Fasern und somit des Klebebands, seiner eigenen Beschaffenheit und der jeweiligen Festigkeit der Fasern und Fäden selbst ab und kann deshalb in weiten Grenzen variieren.

Mit steigender Verstärkung hält der Träger einer größeren Beanspruchung und Belastung stand. Weiter werden die Verstärkungen vorzugsweise gezielt entsprechend der Beanspruchungsrichtung des Trägermaterials eingefügt, das heißt in erster Linie in Längsrichtung. Sie können jedoch auch, wenn dies zweckdienlicher ist, zusätzlich in Quer- oder Schrägrichtung oder beispielsweise kurven-, spiral- oder zickzack-förmig oder regellos verlaufen. Dabei kann es wünschenswert und erreichbar sein, dass das Trägermaterial senkrecht zur Orientierung der Verstärkung und/oder in Richtung der Orientierung von Hand einreißbar ist.

In einer vorteilhaften Ausführungsform des Erfindungsgegenstands weist das das Trägermaterial verstärkende Filamentgewebe folgende Eigenschaftskombinationen auf:
- 100% der Filamente aus Glas
- Flächengewicht des Glasgewebes 39 g/m²
- Anzahl in Längsrichtung verlaufender Filamente: 90/dm (gemessen in Querrichtung)
- Anzahl in Querrichtung verlaufender Filamente: 25/dm (gemessen in Längsrichtung) => Mesh: 1,11 x 4 mm
- Zugfestigkeit: 950 N/ 5 cm in Längsrichtung
   250 N/ 5 cm in Querrichtung
- Dehnung längs und quer je 1,5%
Das Gewebe wird kombiniert mit einem Basisträger aus BoPP mit einer Dicke von 28 µm.

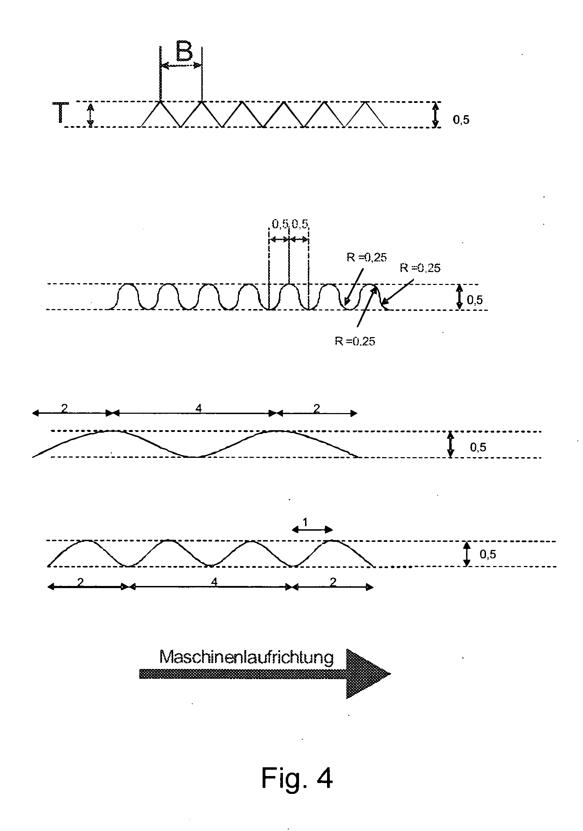

Der Verlauf der Schnittkante des Klebebands ist dergestalt, dass in vorgegebenen Abständen Einschnitte in zumindest eine der beiden Kanten des Trägermaterials vorhanden sind. Die Abstände können dabei beliebig sein, wobei, wenn alle Einschnitte direkt aneinander anschließen, die Abstände gleich null sind, also nicht vorhanden sind.
Jeder Einschnitt setzt sich ausgehend von einem bestimmten Punkt bis zur tiefsten Stelle fort, dem so genannten Minimum. Die Tiefe bezieht sich hier auf die in Laufrichtung des Klebebandes orthogonale Achse, welche von der Klebebandseitenkante in Richtung Klebebandmittellinie verläuft.
Anschließend nimmt die Tiefe des Einschnitts im weiteren Verlauf wieder ab, bis der nächste Wendepunkt erreicht ist und die Tiefe wieder zunimmt. Dieser Punkt stellt ein Maximum dar. Es wird darauf hingewiesen, dass im Falle von Abständen zwischen den Einschnitten die Maxima linienförmig ausgebildet sind.
Ein Maximum muss dabei nicht zwingend mit dem Punkt auf der Kante, der bezogen auf die Trägermitte den größten Abstand von der Trägermitte aufweist, identisch sein, es können verschieden gestaltete und auch verschieden tiefe Einschnitte kombiniert werden, so dass auch relative Maxima auftreten können.
Jeder Einschnitt ist durch zwei Maxima begrenzt, wobei sich zwischen diesen ein Minimum befindet.
In einer vorteilhaften Ausgestaltung der Erfindung liegen, insbesondere bei einem regelmäßigen Kantenverlauf, alle Maxima sowie alle Minima auf jeweils einer Geraden, die parallel zur Trägermitte in Maschinenrichtung ausgerichtet sind.
Jeder einzelne Einschnitt im Randbereich des Klebebands, also an zumindest einer der Längskanten, weist eine bestimmte Tiefe T sowie eine bestimmte Breite B auf. Die Tiefe T (siehe Figur 4) erstreckt sich dabei von dem äußersten Punkt des Einschnitts bis zur tiefsten Stelle im Einschnitt. Die Breite des Einschnitts ist definiert als der Abstand zwischen den beiden Punkten, die den Einschnitt begrenzen, also der Abstand zwischen zwei Maxima im Verlauf der Schnittkante.

Die Einschnitte an zumindest einer Längskante können unregelmäßig angeordnet sein. Die Einschnitte können beabstandet voneinander oder unmittelbar hintereinander angeordnet sein. Es ist aber auch möglich, diese abwechselnd beabstandet voneinander und unmittelbar hintereinander anzuordnen.

In einer vorteilhaften Ausführungsform der Erfindung werden die Einschnitte von einem Streckenzug aus bevorzugt gleich langen Strecken gebildet, die n Punkte miteinander verbinden, wobei n zwischen 1 und unendlich liegen kann. Weiter vorzugsweise sind die zwischen den einzelnen Strecken vorhandenen Winkel ebenfalls alle gleich groß.

Folgende Werte für n haben sich als besonders vorteilhaft erwiesen:
- n gleich 1, so dass der Einschnitt die Form eines gleichschenkligen Dreiecks aufweist,
- n gleich 2 ist, so dass der Einschnitt die Form eines Trapezes aufweist,
- n gleich 3 ist, so dass der Einschnitt die Form eines halben Oktogons aufweist, oder
- n gleich unendlich ist, so dass der Einschnitt die Form einer Kurve aufweist, insbesondere die Form eines Halbkreises.

Die Einschnitte können aneinandergereiht eine bevorzugt regelmäßige wellenförmige Form ergeben ohne oder mit nur kurzen linearen Bereichen zwischen Spitzen und Basen jedes einzelnen Einschnitts, so dass sich ein Verlauf ergibt, der zum Beispiel einer Sinuskurve ähnelt.

Der bevorzugt eingesetzte Zackenschnitt besteht aus einer Aneinanderreihung von zackenförmigen, in einer vorteilhaften Ausführungsform identischen Einkerbungen, die zumindest an einer der Längskanten des Klebebands vorhanden sind. Die Einkerbungen können insbesondere an der in den Träger des Klebebands ragenden Spitze abgerundet sein, also einen Radius aufweisen. Dies gilt natürlich auch für die nach außen weisenden Spitzen zwischen den einzelnen Einkerbungen, auch diese können abgerundet sein.
Bei diesem sehr regelmäßigen Schnittkantenverlauf haben alle Maxima sowie alle Minima jeweils den gleichen Abstand zur Trägermitte.

In einer anderen vorteilhaften Ausführungsform der Erfindung werden die Einschnitte gebildet, indem die Kante selbst in regelmäßigen Abständen aus einem Streckenzug aus bevorzugt gleich langen Strecken gebildet wird, die n Punkte miteinander verbinden, wobei n zwischen 1 und unendlich liegen kann, so dass im Kantenbereich von der Trägermitte weg ragende Dreiecke, Trapeze oder Halbellipsen stehen bleiben und die dazwischen befindlichen Abschnitte ausgeschnitten oder ausgestanzt werden. Weiter vorzugsweise sind auch hier die zwischen den einzelnen Strecken vorhandenen Winkel ebenfalls alle gleich groß.

Obwohl der Zackenschnitt die gestellte Aufgabe bereits sehr gut löst, kann es unter bestimmten Bedingungen zum Übertrag von Klebmasse von den Kanten des auf eine Oberfläche applizierten Bandes auf andere Oberflächen, die auf dem Band aufliegen oder über dieses bewegt werden, kommen. Die auf diese Weise mit Klebmasse verunreinigten Oberflächen führen dann in nachfolgenden Prozessen, wie zum Beispiel dem Druckvorgang, zu Störungen. Bei industrieller Massenfertigung, zum Beispiel dem Bedrucken von Kartonagen, kann dies zur ökonomisch unvorteilhaften Produktion von Ausschussware und zu empfindlichen Stillstandszeiten von Anlagen führen.

Der beschriebene Klebmasseübertrag rührt daher, dass die Masse beim Schneidprozess, der zum Zackenschnitt führt, nicht immer vollkommen bündig mit dem Träger des Klebebandes abgetrennt wird. In Abhängigkeit von Bauart der Messer, Schneidprozess- und auch Applikationsprozessführung kann nach dem Schneidvorgang mehr oder weniger Klebmasse über den Trägerkante hinaus stehen oder sogar auch auf den seitlichen Rand des Klebebandträgers aufgeschmiert werden. An den Spitzen der Zacken sind diese Klebmassebereiche aus geometrischen Gründen deutlich weniger stark an benachbarte Massebereiche gebunden. Insbesondere im Falle einer wenig kohäsiven Masse einerseits und besonders hoher mechanischer Beanspruchung durch einen auf dem applizierten Klebeband reibenden oder auf dem Klebeband liegenden Gegenstand andererseits kann es dazu kommen, dass sich die Klebmasse von den Zackenspitzen beziehungsweise -seiten ablöst und auf die Oberfläche des reibenden Gegenstandes überträgt.

Dieses Problem wird vollständig unterdrückt, wenn statt fortlaufender mehr oder weniger spitzer Zacken in dreieckiger Form entweder runde Aus- und Einbuchtungen (gleichbedeutend Wellen) oder auch geradlinig gebildete Einbuchtungen mit einem oder mehreren mehr oder weniger stumpfen Winkeln der Ecken vorgesehen werden.
Als Wirkprinzip kann zum einen eine Verringerung der Scherbelastung der Klebmasse an den exponierten Stellen der Kanten beim Schneiden und zum anderen eine Reduktion des seitlichen Herausdrückens der Klebmasse bei oder nach der Applikation des Klebebandes angesehen werden.

In einer anderen vorteilhaften Ausführungsform der Erfindung werden die Einschnitte von Schnitten gebildet, die sich von der Kante des Klebebands ausgehend in Richtung der Mitte des Trägermaterials erstrecken, wobei jeder Schnitt mindestens ein zur Schnittkante im Wesentlichen parallel ausgerichtetes Filament durchtrennt.
Die Schnitte können gerade verlaufen, wobei der Winkel zwischen Schnitt und Kante des Klebebands beliebig gewählt werden kann. Bevorzugt sind Schnitte, die in Querrichtung verlaufen, also einen rechten Winkel mit der Kante bilden.
Die Schnitte können des Weiteren jeden beliebigen regel- oder unregelmäßigen Kurvenverlauf aufweisen.

Die Häufigkeit der Einschnitte/Einkerbungen beträgt vorzugsweise mindestens 1 Stück/ 30 cm, bevorzugt mindestens 1 Stück/5 cm, weiter bevorzugt mindestens 1 Stück/cm.
Darüber hinaus haben sich Varianten als vorteilhaft erwiesen, wenn 10 bis 30 Stück/cm, vorzugsweise 15 bis 25 Stück/cm Einschnitte/Einkerbungen vorhanden sind, wobei die Einkerbungen ebenfalls unregelmäßig angeordnet und von unterschiedlicher Tiefe sein können.
In einer weiteren vorteilhaften Ausführungsform der Erfindung sind Einschnitte/Einkerbungen vorhanden, die eine Tiefe von 15 bis 100 µm aufweisen, wobei weiter vorzugsweise die Einschnitte alle die gleiche Tiefe aufweisen.

Zur Herstellung der Einschnitte können alle handelsüblichen Schneid-, Schlitz- oder Stanzverfahren benutzt werden, die die benötigte Präzision mitbringen und/oder für das Einbringen von Einschnitten in dem gewünschten Abstand geeignet sind. Darüber hinaus gewinnt der Einsatz von Lasern zunehmend an Bedeutung.

In einer vorteilhaften Ausführungsform erfolgt die Herstellung eines Zackenschnitts mit dem nachfolgend erläuterten Verfahren:

Zum Längsschneiden der mit Klebemasse beschichteten Folienbahn werden rotierende Quetsch-Schneidmesser, die in ihrer Schneide-Geometrie als Zick-Zack-Messer ausgestaltet sind, eingesetzt (Muster c bis f). Muster a und b entsprechen Referenzfolien mit gerader Seitenkante, wobei das Schneiden mit S- beziehungsweise Q-Schnitt ausgeführt wurde.

| | |
|---|---|
| Höhe Zick-Zackmesser | 0,2 mm |
| Zähnezahl: | 604 |
| Schneidphasenwinkel: | 90° |
| Zahnbreite: | 0,2 mm |
| Schnittflächenbreite: | < 0,05 mm |

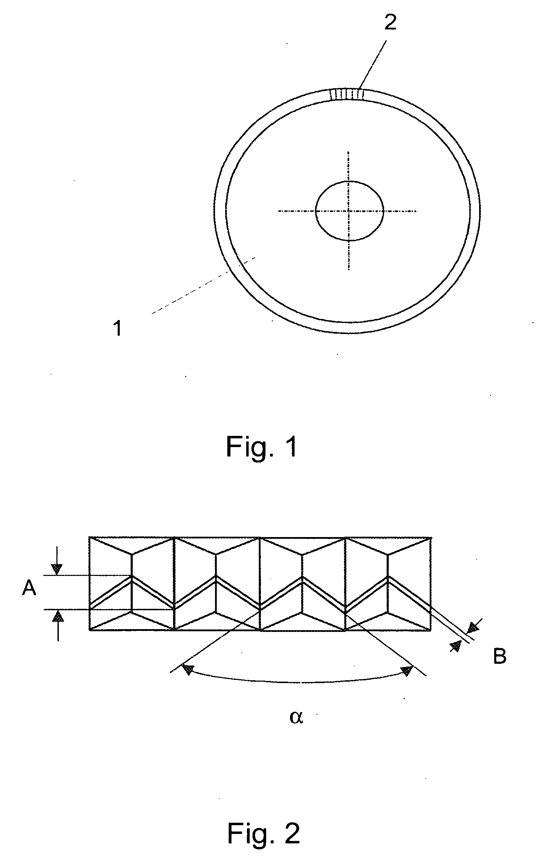

In den Figuren 1 und 2 ist das verwendete Quetsch-Schneidmesser 1 gezeigt. Das Messer 1 hat 604 Zähne 2. Der Schneidphasenwinkel α beträgt α = 90°. Die Zahnbreite A ist in der anschließenden Tabelle gezeigt, die Schnittflächenbreite B liegt unter 0,05 mm.

| | | Höchstzugkraft | Reißdehnung |
|---|---|---|---|
| Muster | Zahnbreite A | [N/cm] | [%] |
| a | S-Schnitt | 273 | 5,3 |
| b | Q-Schnitt | 276 | 5,4 |
| c | Zacke 1 mm | 270 | 5,2 |
| d | Zacke 0,5 mm | 273 | 5,3 |
| e | Zacke 0,2 mm | 278 | 5,3 |
| f | Zacke 2,2 mm | 235 | 5,2 |

Die in der Tabelle aufgeführten Ergebnisse belegen, dass die mechanischen Eigenschaften wie Reißdehnung und Höchstzugkraft trotz der Schwächung des Trägermaterials durch den Zackenschnitt praktisch vollständig erhalten bleiben. Gleichzeitig findet sich, dass durch die Einkerbungen der Längskante, welche hier nicht mehr als ein zur Schnittkante im Wesentlichen parallel ausgerichtetes Filament durchtrennen, Ausrisse von sehr langen Fasern vermieden werden, die den Prozess der maschinellen Verarbeitung des Klebebands stören könnten.

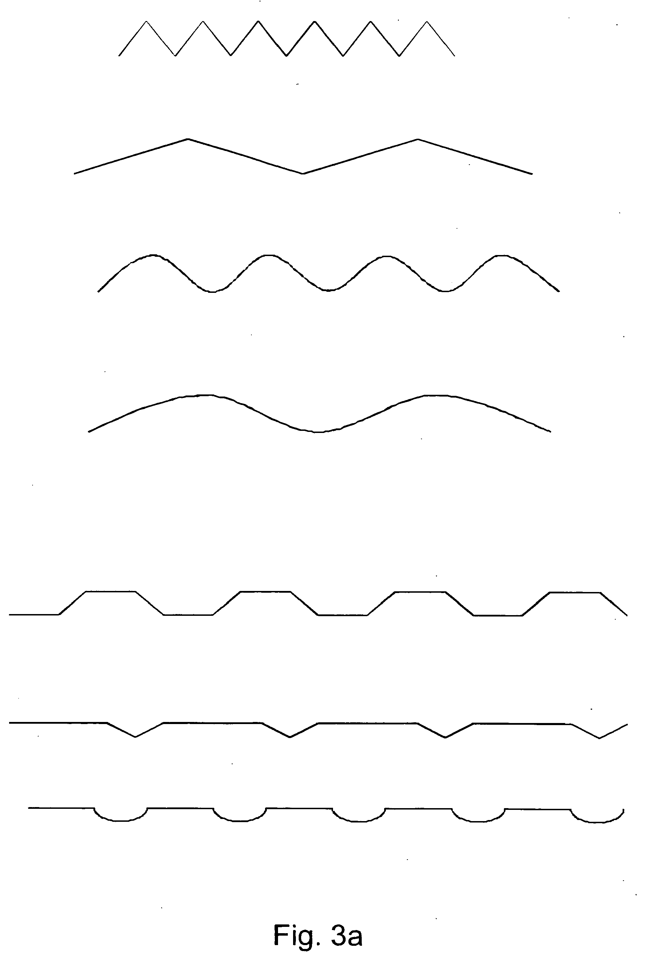

In der Figur 3a sind diverse Ausführungsformen für die Geometrie der Einschnitte in zumindest eine Kante des Klebebands dargestellt. Die Einschnitte zeichnen sich dadurch aus, dass in regelmäßigen Abständen mathematische Figuren wie Dreiecke, Trapeze oder Halbellipsen aus dem Träger ausgeschnitten oder ausgestanzt sind.
Das erste Schnittmuster stellt den so genannten Zackenschnitt dar.

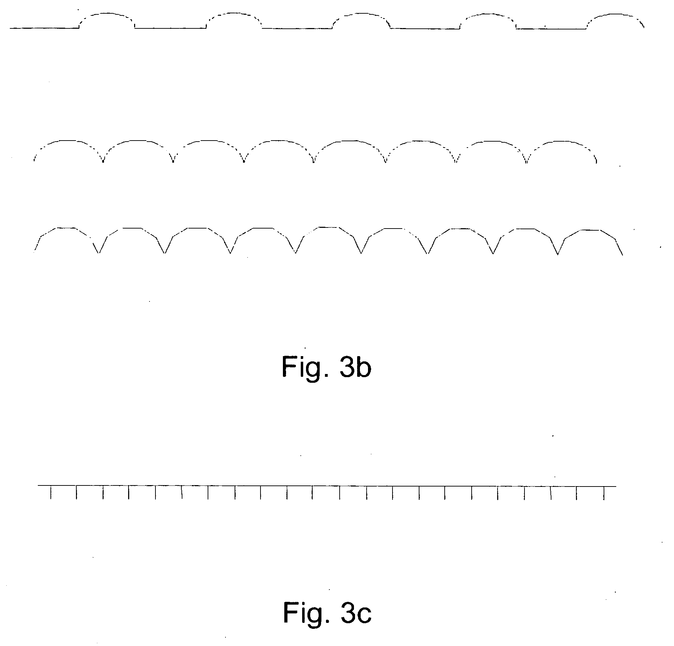

In einer anderen Ausführungsform der Erfindung gemäß Figur 3b werden die Einschnitte gebildet, indem im Kantenbereich die mathematischen Figuren wie Dreiecke, Trapeze oder Halbellipsen stehen bleiben und die dazwischen befindlichen Abschnitte ausgeschnitten oder ausgestanzt werden.

In der Figur 3c ist eine Ausführungsform gezeigt, bei die Einschnitte von Schnitten gebildet werden, die sich von der Kante des Klebebands ausgehend in Richtung der Mitte des Trägermaterials erstrecken, und zwar in Querrichtung des Klebebands. Die Schnitte bilden einen rechten Winkel mit der Kante.

Als besonders vorteilhaft haben sich die in Figur 4 gezeigten Muster in der Kante des Klebebands erwiesen. Es ist jeweils die Kante eines Klebebands von 19 mm Breite gezeigt. Alle Zahlenangaben in Figur 4 sind in Millimetern.

## Patentansprüche

1. Verwendung eines Klebebands als Verstärkungsband auf Folien oder Papier, Well- oder Vollpappe, vorzugsweise an exponierten Stellen wie Eingriffen, Henkeln und Auslässen, wobei das Klebeband ein Trägermaterial aufweist, auf das zumindest einseitig eine Klebemasse aufgetragen ist und dessen Festigkeit in Längsrichtung durch integrierte beziehungsweise angefügte Fasern oder Filamente verstärkt ist, wobei das Klebeband an mindestens einer Längskante Einschnitte aufweist, wobei die Einschnitte je Längskante mindestens ein zur Schnittkante im Wesentlichen parallel ausgerichtetes Filament durchtrennen.

2. Verwendung nach Anspruch 1, **dadurch gekennzeichnet, dass** die Einzelfilamente Endlosfilamente sind und/oder eine Feinheit zwischen 4 und 8 dtex aufweisen.

3. Verwendung nach Anspruch 1 oder 2, **dadurch gekennzeichnet, dass** die Einzelfilamente in einer parallel ausgerichteten Lage oder höchstens in drei parallel ausgerichteten Lagen angeordnet sind.

4. Verwendung nach zumindest einem der Ansprüche 1 bis 3, **dadurch gekennzeichnet, dass** die Einzelfilamente aus hochfesten Fasern geringer Reißdehnung wie zum Beispiel Glasfasern oder Kohlenstofffasern (Carbon) oder auch aus Polymerfasern wie Polyesterfasern, Polypropylenfasern, Polyethylenfasern, Polyamidfasern oder Aramid-Fasern bestehen.

5. Verwendung nach zumindest einem der vorherigen Ansprüche, **dadurch gekennzeichnet, dass**
sich zwischen 1 und 30 Filamente pro Zentimeter Breite in dem Trägermaterial, insbesondere zwischen 1 und 5 befinden.

6. Verwendung nach zumindest einem der vorherigen Ansprüche, **dadurch gekennzeichnet, dass**
das Trägermaterial durch ein offenes Filamentgewebe verstärkt ist.

7. Verwendung nach zumindest einem der vorherigen Ansprüche, **dadurch gekennzeichnet, dass**
das Trägermaterial eine Dicke von 10 bis 100 µm, insbesondere von 20 bis 40 µm aufweist.

8. Verwendung nach zumindest einem der vorherigen Ansprüche, **dadurch gekennzeichnet, dass**
der Auftrag an Klebemasse auf das Trägermaterial zwischen 30 bis 100 g/m², weiter vorzugsweise zwischen 60 bis 80 g/m² beträgt.

9. Verwendung nach zumindest einem der vorherigen Ansprüche, **dadurch gekennzeichnet, dass**
die Einschnitte von einem Streckenzug aus bevorzugt gleich langen Strecken gebildet werden, die n Punkte miteinander verbinden, wobei n zwischen 1 und unendlich liegen kann.

10. Verwendung nach Anspruch 9, **dadurch gekennzeichnet, dass**
n gleich 1 ist, so dass der Einschnitt die Form eines gleichschenkligen Dreiecks aufweist,
n gleich 2 ist, so dass der Einschnitt die Form eines Trapezes aufweist,
n gleich 3 ist, so dass der Einschnitt die Form eines halben Oktogons aufweist, oder n gleich unendlich ist, so dass der Einschnitt die Form einer Kurve aufweist, insbesondere die Form eines Halbkreis.

11. Verwendung nach zumindest einem der vorherigen Ansprüche, **dadurch gekennzeichnet, dass**
die Einschnitte gebildet werden, indem die Kante selbst in regelmäßigen Abständen aus einem Streckenzug aus bevorzugt gleich langen Strecken gebildet wird, die n Punkte miteinander verbinden, wobei n zwischen 1 und unendlich liegen kann, so dass die dazwischen befindlichen Abschnitte ausgeschnitten oder ausgestanzt werden.

12. Verwendung nach zumindest einem der vorherigen Ansprüche, **dadurch gekennzeichnet, dass**
die Einschnitte von Schnitten gebildet werden, die sich von der Kante des Klebebands ausgehend in Richtung der Mitte des Trägermaterials erstrecken, wobei jeder Schnitt mindestens ein zur Schnittkante im Wesentlichen parallel ausgerichtetes Filament durchtrennt.

13. Verwendung nach zumindest einem der vorherigen Ansprüche, **dadurch gekennzeichnet, dass**
die Einschnitte beabstandet voneinander oder unmittelbar hintereinander angeordnet sind oder abwechselnd beabstandet voneinander und unmittelbar hintereinander.

14. Verwendung nach zumindest einem der vorherigen Ansprüche, **dadurch gekennzeichnet, dass**
die Einschnitte derart angeordnet sind, dass der Kantenverlauf des Klebebands zickzackförmig ist oder die Form einer Sinuskurve annimmt.

15. Verwendung nach zumindest einem der vorherigen Ansprüche, **dadurch gekennzeichnet, dass**
die Einschnitte alle die gleiche Tiefe aufweisen.

## Claims

1. Use of an adhesive tape as reinforcing tape on films or paper, corrugated board or solid board, preferably at exposed positions such as grips, handles and cutouts, the adhesive tape having a backing material applied to at least one side of which is an adhesive and whose strength in lengthwise direction is reinforced by integrated or added fibres or filaments, the adhesive tape on at least one long edge having incisions, the incisions severing per long edge at least one filament aligned substantially parallel to the cut edge.

2. Use according to Claim 1, **characterized in that** the individual filaments are continuous filaments and/or have a linear density of between 4 and 8 dtex.

3. Use according to Claim 1 or 2, **characterized in that** the individual filaments are disposed in one parallel alignment or at most in three parallel alignments.

4. Use according to at least one of Claims 1 to 3, **characterized in that** the individual filaments are composed of high-strength fibres of low breaking extension, such as glass fibres or carbon fibres, or else of polymer fibres such as polyester fibres, polypropylene fibres, polyethylene fibres, polyamide fibres or aramid fibres.

5. Use according to at least one of the preceding claims, **characterized in that** there are between 1 and 30 filaments per centimetre width in the backing material, in particular between 1 and 5.

6. Use according to at least one of the preceding claims, **characterized in that** the backing material is reinforced by an open filament fabric.

7. Use according to at least one of the preceding claims, **characterized in that** the backing material has a thickness of 10 to 100 µm, in particular of 20 to 40 µm.

8. Use according to at least one of the preceding claims, **characterized in that** the application of adhesive to the backing material amounts to between 30 to 100 g/m², more preferably between 60 to 80 g/m².

9. Use according to at least one of the preceding claims, **characterized in that** the incisions are formed by a train of sections made up of sections preferably of equal length and joining n points to one another, it being possible for n to be between 1 and infinity.

10. Use according to Claim 9, **characterized in that**
n is equal to 1, so that the incision has the form of an isosceles triangle,
n is equal to 2, so that the incision has the form of a trapezium,
n is equal to 3, so that the incision has the form of a half-octagon, or
n is equal to infinity, so that the incision has the form of a curve, in particular the form of a semicircle.

11. Use according to at least one of the preceding claims, **characterized in that** the incisions are formed by forming the edge itself at regular intervals from a train of sections made up of sections preferably of equal length and joining n points to one another, it being possible for n to be between 1 and infinity, so that the areas situated between them are cut out or punched out.

12. Use according to at least one of the preceding claims, **characterized in that** the incisions are formed by cuts which extend from the edge of the Use in the direction of the centre of the backing material, each cut severing at least one filament aligned substantially parallel to the cut edge.

13. Use according to at least one of the preceding claims, **characterized in that** the incisions are at a distance from one another or immediately behind one another or alternate between being at a distance from one another and immediately behind one another.

14. Use according to at least one of the preceding claims, **characterized in that** the incisions are arranged such that the edge profile of the Use is zig-zag or adopts the form of a sinusoidal curve.

15. Use according to at least one of the preceding claims, **characterized in that** the incisions all have the same depth.

## Revendications

1. Utilisation d'une bande adhésive comme bande de renforcement sur des feuilles ou du papier, du carton ondulé ou du carton plein, de préférence en des endroits exposés tels que les empiètements, les anses et les évacuations, où la bande adhésive présente un matériau support sur lequel est appliquée, au moins sur une face, une masse adhésive et dont la solidité dans le sens longitudinal est renforcée par des fibres ou des filaments intégrés ou accolés, la bande adhésive présentant des incisions au moins sur un côté longitudinal, les incisions coupant, par bord longitudinal, au moins un filament orienté de manière essentiellement parallèle au bord de coupe.

2. Utilisation selon la revendication 1, **caractérisée en ce que** les différents filaments sont des filaments sans fin et/ou présentent une finesse entre 4 et 8 dtex.

3. Utilisation selon la revendication 1 ou 2, **caractérisée en ce que** les filaments individuels sont disposés dans une couche orientée parallèlement ou au plus dans trois couches orientées parallèlement.

4. Utilisation selon au moins l'une quelconque des revendications 1 à 3, **caractérisée en ce que** les filaments individuels sont constitués par des fibres hautement résistantes de faible allongement à la rupture telles que par exemple des fibres de verre ou des fibres de carbone (Carbon) ou également des fibres polymères telles que des fibres de polyester, de polypropylène, de polyéthylène, de polyamide ou d'aramide.

5. Utilisation selon au moins l'une quelconque des revendications précédentes, **caractérisée en ce qu'**entre 1 et 30 filaments, en particulier entre 1 et 5 filaments se trouvent par centimètre de largeur dans le matériau support.

6. Utilisation selon au moins l'une quelconque des revendications précédentes, **caractérisée en ce que** le matériau support est renforcé par un tissu ouvert en filaments.

7. Utilisation selon au moins l'une quelconque des revendications précédentes, **caractérisée en ce que** le matériau support présente une épaisseur de 10 à 100 µm, en particulier de 20 à 40 µm.

8. Utilisation selon au moins l'une quelconque des revendications précédentes, **caractérisée en ce que** la masse appliquée de masse adhésive sur le matériau support est située entre 30 à 100 g/m², plus préférablement entre 60 à 80 g/m².

9. Utilisation selon au moins l'une quelconque des revendications précédentes, **caractérisée en ce que** les incisions sont formées par une succession de lignes de préférence de longueur identique, qui relient n points les uns aux autres, où n peut être situé entre 1 ou l'infini.

10. Utilisation selon la revendication 9, **caractérisée en ce que**
n vaut 1, de manière telle que l'incision présente la forme d'un triangle isocèle,
n vaut 2, de manière telle que l'incision présente la forme d'un trapèze,
n vaut 3, de manière telle que l'incision présente la forme d'un demi-octogone, ou
n vaut l'infini, de manière telle que l'incision présente la forme d'une courbe, en particulier la forme d'un demi-cercle.

11. Utilisation selon au moins l'une quelconque des revendications précédentes, **caractérisée en ce que** des incisions sont formées, **en ce que** le bord lui-même est formé à des distances régulières, par une succession de lignes de préférence de longueur identique, qui relient n points les uns aux autres, où n peut être situé entre 1 et l'infini, de manière telle que des sections se trouvant entre ceux-ci sont découpées ou perforées.

12. Utilisation selon au moins l'une quelconque des revendications précédentes, **caractérisée en ce que** les incisions sont formées par des entailles qui s'étendent, partant du bord de la bande adhésive, vers le milieu du matériau support, où chaque entaille coupe au moins un filament orienté de manière essentiellement parallèle au bord de l'incision.

13. Utilisation selon au moins l'une quelconque des revendications précédentes, **caractérisée en ce que** les entailles sont disposées à une certaine distance l'une de l'autre ou de manière directement successive et alternativement à une certaine distance et de manière directement successive.

14. Utilisation selon au moins l'une quelconque des revendications précédentes, **caractérisée en ce que** les entailles sont disposées de manière telle que l'allure du bord de la bande adhésive est en forme de zigzag ou présente la forme d'une courbe sinusoïdale.

15. Utilisation selon au moins l'une quelconque des revendications précédentes, **caractérisée en ce que** les incisions présentent toutes la même profondeur.
